# EUROPÄISCHE PATENTSCHRIFT

(11) **EP 3 377 846 B1**
(45) Veröffentlichungstag und Bekanntmachung des Hinweises auf die Patenterteilung: **23.12.2020**
(21) Anmeldenummer: 16797507.7
(22) Anmeldetag: 14.11.2016
(51) Int. Cl.: G01B 5/20, G01B 5/24

(54) **TAKTILE PLANLAUFMESSUNG UND LÄNGENMESSUNG**
TACTILE RUNOUT MEASUREMENT AND LENGTH MEASUREMENT
MESURE DE PLANÉITÉ ET MESURE DE LONGUEUR PAR VOIE TACTILE

(30) Priorität: 20.11.2015 DE 102015120177
(43) Veröffentlichungstag der Anmeldung: 26.09.2018
(73) Patentinhaber: Rattunde AG, 19288 Ludwigslust (DE)
(72) Erfinder: RATTUNDE, Ulrich, 19322 Bentwisch (DE)
(74) Vertreter: Groth, Wieland
(86) Internationale Anmeldenummer: PCT/EP2016/077573
(87) Internationale Veröffentlichungsnummer: WO 2017/085013

(56) Entgegenhaltungen:
- DE-A1- 4 225 195
- DE-A1-102011 018 297
- DE-A1-102011 116 339
- DE-B3-102006 019 354
- US-B1- 6 996 914

## Beschreibung

Die Erfindung betrifft eine Messvorrichtung zur Messung eines Planlaufs einer Planfläche eines Langprofils. Die Erfindung betrifft auch ein Verfahren zur Messung eines Planlaufs einer Planfläche eines Langprofils.

Rotationssymmetrische Rohre und Vollmaterialien werden nach dem Ablängen von Langprofilen durch Rohrschneidemaschinen an den Enden weiter bearbeitet.

Insbesondere werden die Werkstücksenden gefast und geplant. Die Anforderungen an die Planfläche steigen ständig. In der Regel ist es notwendig, einen Planlauf an der Planfläche von weniger als 0,05 mm zu realisieren.

Darüber hinaus ist es notwendig, den Planlauf in der Maschine bei voller Produktivität zu messen, es sind Messgenauigkeiten von besser als 1,2 µm notwendig. Da die Produktivität hoch ist, d. h. die Zykluszeit lediglich 1,3 sec beträgt, ist es erforderlich, innerhalb sehr kurzer Zeit, den Planlauf exakt zu vermessen, eine Messung sollte innerhalb von ca. 0,6 sec realisiert werden.

Aus der DE 10 2011 018 297 A1 ist eine Linearführung für eine Messeinrichtung einer Rohrschneidemaschine bekannt, mit einem Führungselement, das eine gewellte Außenwandung aufweist, wobei das Führungselement in einem Kanal hin und her verfahrbar ist.

In der DE 42 25 195 A1 ist ein Verfahren zur Messung von Rund- und Planlaufabweichungen eines Rohres offenbart, bei dem ein mittels einer spielausgleichenden Spannaufnahme in einer Prüfmaschine aufgenommener Rotor gedreht wird, während der Drehung, der Rotor durch berührende oder berührungslose Sensoren im Bereich seiner Umfangs- und/oder Seitenfläche abgetastet wird und daraus ein Rund- und/oder Planlaufdiagramm erstellt wird.

In der DE 10 2006 019 354 B3 ist eine Profilmessvorrichtung zur Messung des Profils einer Oberfläche eines schmalen Körpers, insbesondere des Profils der Oberfläche einer Wandung eines Rohrendes bekannt. Die Messvorrichtung weist zwei Tastköpfe auf, die schräg relativ zur Verfahrrichtung des Messkopfes beweglich sind.

Bekannte Messvorrichtungen weisen einen einzelnen Messtaster auf, an dem eine Planfläche in einer Rotationsbewegung um eine Längsachse des Langprofils vorbeigeführt wird. Es werden dabei Messwerte ermittelt und die Messwerte anschließend ausgewertet. Aufgrund der Rotationsbewegung des Langprofils ist die Messgenauigkeit nicht hoch genug, und die Messdauer ist zu lang, um die genannten Anforderungen zu erfüllen.

Es ist daher Aufgabe der vorliegenden Erfindung, eine Messvorrichtung zur Bestimmung des Planlaufs einer Planfläche eines Langprofils mit einer hohen Messgenauigkeit und einer kurzen Zykluszeit zur Verfügung zu stellen.

Weiter ist es Aufgabe der vorliegenden Erfindung, ein Verfahren zur Verfügung zu stellen, das einen Planlauf einer Planfläche eines Langprofils mit einer hohen Messgenauigkeit und einer geringen Zykluszeit ermöglicht.

Hinsichtlich der Vorrichtung wird die Aufgabe durch eine Messvorrichtung der eingangs genannten Art mit den Merkmalen des Anspruchs 1 erfüllt.

Zur Messung eines Planlaufs einer Planfläche eines Langprofils weist wenigstens ein in einer Längsachse hin und her verschiebbarer Messkopf eine Vielzahl nebeneinander angeordneter Messtaster auf, die zu einer neben dem Messkopf angeordneten Auflage für das Langprofil weisen, und die Messvorrichtung weist eine Auswerteeinrichtung auf, die mit jedem der Messtaster messdatenleitend verbunden ist und aus Einzelmesswerten den Planlauf berechnet.

Die Erfindung macht von der Idee Gebrauch, den Planlauf einer Planfläche eines Langprofils dadurch zu bestimmen, dass in einem einzigen Messvorgang gleichzeitig eine Vielzahl an Einzelmessungen durch jeweils einen der Messtaster vorgenommen wird, somit die Messzeit gegenüber bekannten Messvorrichtungen deutlich verkürzt wird, da auf eine Rotation des Langprofils in der Aufnahme verzichtet werden kann; stattdessen werden die Einzelmessergebnisse ausgewertet und aus den Einzelmesswerten der Planlauf berechnet. Bei dem Langprofil handelt es sich vorzugsweise um um die Längsachse rotationssymmetrische Profile, insbesondere um Rohre oder im Querschnitt kreisförmige Vollprofile. Es ist jedoch auch denkbar, im Querschnitt beliebige Profile, insbesondere rechteckige, dreieckige oder quadratische Profile zu verwenden.

Unter der Planfläche wird die stirnseitige Fläche des Langprofils, insbesondere des Rohres oder Vollprofils verstanden; bei einem Rohr ist die Planfläche ein Ring, bei einem Vollprofil eine Kreisscheibe.

Der Planlauf ist ein Maß für die Ebenheit der Planfläche. Der Planlauf ist die maximale Distanz, um die die Planfläche bei Rotation um eine Längsachse vor- und zurückspringt. Nach Möglichkeit soll bei Rotationsbewegung der Planfläche der Planlauf weniger als 0,05 mm betragen. Um einen Planlauf von 50 µm hinreichend genau zu messen, ist eine Messgenauigkeit von besser, d. h. weniger als 1,25 µm erforderlich. Die erfindungsgemäße Messvorrichtung ermöglicht eine Messgenauigkeit von genauer als 1,25 µm, dabei dauert die einzelne Messung lediglich 0,6 sec. Dabei umfasst die Zeitdauer der Messung auch das Einlegen des Langprofils in die Auflage, die eigentliche Messung mit dem Heranfahren des Messkopfes an die Planfläche und das Herausnehmen des Langprofils und die Auswertung. Um in einem Produktionsprozess in einer Maschine eine Messung ausführen zu können, ist es erforderlich, dass die Messvorrichtung einen Messfähigkeitsindex, den sogenannten Cgk-Wert von mindestens 1,33 hat. Ist dieser Cgk-Wert nicht erfüllt, so ist die Messvorrichtung für die zu messende Toleranz nicht geeignet. Die Messfähigkeit Cg berechnet sich nach Cg=0,2*T/6/Sg, wobei T die Toleranz, Sg die Standardabweichung der Messungen ist. Cg muss mindestens 1,33 oder höher sein. Der Cgk-Wert berücksichtigt noch die Lage des Mittelwertes und ist nur gleich dem Cg-Wert, wenn der Mittelwert mit dem Sollwert übereinstimmt. Ansonsten ist der Cgk-Wert immer entsprechend kleiner. Wenn man annimmt, dass der Mittelwert der Messungen gleich dem Sollwert ist, dann errechnet sich die Messgenauigkeit, d. h. die Standardabweichung in obiger Formel des Messsystems bei einer Toleranz von 0,05 mm zu Sg=0,2*0,05/6/1,33=0,00125 mm oder 1,25 µm. Eine Messgenauigkeit von 1,25 µm für eine Toleranz von T=50 µm erscheint sehr hoch, sie hat sich in der Praxis aber als erforderlich erwiesen, um dem Messwert hinreichend sicher vertrauen zu können.

Erfindungsgemäß weist die Messvorrichtung zwei sich entlang der Längsachse gegenüberliegende Messköpfe auf, zwischen denen die Auflage für das Langprofil angeordnet ist. Dabei weisen Messtaster des einen Kopfes zu einer Seite der Auflage und weitere Messtaster des weiteren Messkopfes zur anderen Seite der Auflage. Jeder der Messtaster und jeder der weiteren Messtaster ist einzeln und unabhängig von den anderen Messtastern und den weiteren Messtastern in Längsrichtung beweglich ausgebildet.

Die weiteren Messtaster sind wie die Messtaster des Messkopfes ebenfalls nebeneinander am weiteren Messkopf angeordnet. Die Ausbildung der Messvorrichtung mit zwei Messköpfen ermöglicht es, gleichzeitig den Planlauf sich gegenüberliegender Enden des Langprofils, insbesondere des Rohrabschnittes oder des Vollprofilabschnittes, gleichzeitig zu vermessen.

Günstigerweise werden mit der Messvorrichtung im Querschnitt senkrecht zur Längsrichtung Planläufe kreisförmiger Langprofile bestimmt, daher sind die Messtaster und/oder die weiteren Messtaster kreisförmig am Messkopf bzw. weiteren Messkopf angeordnet. Es sind aber auch andere, insbesondere die oben aufgeführten Profile, denkbar. Die Messtaster können insbesondere bei den anderen Profilen auch den Profilen angepasst am Messkopf angeordnet sein.

Vorzugsweise weist jeder der Messtaster eine Anlage für den Kontakt mit dem Langprofil auf, und jedem Messtaster ist darüber hinaus ein Messsystem zugeordnet, das der Anlage gegenüberliegend am Messtaster angeordnet ist und das mit der Auswerteeinrichtung messdatenleitend in Verbindung steht. Bei dem Messsystem kann es sich um einen taktilen Messtaster handeln, der eine Verschiebung des Messtasters entlang der Längsachse mit einer Genauigkeit von weniger als einem Mikrometer bestimmen kann. Die Messsysteme können aber auch induktive Wegmesssysteme, Lasermesssysteme oder andere Messsysteme sein. Es sind auch Kombinationen der Messsystemarten denkbar.

Günstigerweise ist auch der weitere Messkopf entlang der Längsachse hin und her verschiebbar ausgebildet.

In einer besonders bevorzugten Ausführungsform der Erfindung weist die Messvorrichtung einen dem Messkopf zugeordneten Positionsgeber und einen dem Messkopf zugeordneten weiteren Positionsgeber auf; der Positionsgeber und der weitere Positionsgeber können die Position des Messkopfes bzw. weiteren Messkopfes bestimmen. Dadurch ist es möglich, neben dem Planlauf auch die Länge des Langprofils zu bestimmen und mittels der Auswerteeinrichtung aus der Länge unter Berücksichtigung des Planlaufes auf eine maximale, minimale und durchschnittliche Länge des Langprofils entlang der Längsachse zu schließen. Hinsichtlich des Verfahrens wird die Aufgabe durch ein Verfahren mit den Merkmalen des Anspruchs 6 gelöst.

Das Verfahren zur Messung eines Planlaufs einer Planfläche des Langprofils umfasst die erfindungsgemäßen Schritte, dass das Langprofil in eine Auflage gelegt wird, wenigstens ein Messkopf mit einer Vielzahl nebeneinander angeordneter Messtaster entlang einer Längsachse zur Planfläche verschoben wird, bis alle Messtaster einen Abschnitt der Planfläche berühren und Messwerte der Messtaster einer Auswerteeinrichtung zugeführt werden, die aus Einzelmesswerten den Planlauf berechnet.

Das erfindungsgemäße Verfahren eignet sich insbesondere zur Durchführung mit einer der oben genannten Messvorrichtungen.

Erfindungsgemäß werden aus den Einzelmesswerten Differenzwerte, bevorzugt benachbarter Messtaster, berechnet und aus den Differenzwerten der Planlauf errechnet.

Das Verfahren ist besonders kurz, d. h. die Messung kann in weniger als 0,6 sec realisiert werden, da das Langprofil lediglich in die Auflagen gelegt werden muss und ein Messkopf oder in einer anderen Ausführungsform des Verfahrens ein Messkopf und ein weiterer Messkopf gleichzeitig auf die Enden des Langprofils verfahren werden und gleichzeitig eine Mehrzahl von Einzelmessungen an jedem der Messtaster bzw. weiteren Messtaster des weiteren Messkopfes durchgeführt werden und aus den gleichzeitig gewonnenen Messwerten in der Auswerteeinrichtung der Planlauf berechnet wird. Es ist daher nicht erforderlich, das Langprofil an einem Messkopf entlangzuführen, beispielsweise durch Rotationsbewegungen oder Ähnliches.

Die Erfindung wird anhand eines Ausführungsbeispiels in sieben Figuren beschrieben, dabei zeigen:

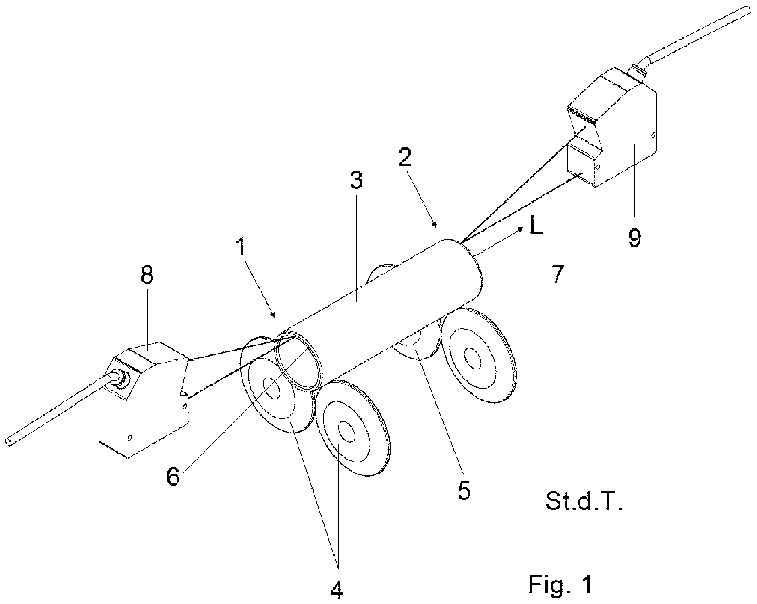

- Fig. 1: eine erste Messvorrichtung im Stand der Technik zur Bestimmung eines Planlauffehlers,
- Fig. 2: eine zweite Messvorrichtung im Stand der Technik zur Bestimmung des Planlauffehlers,
- Fig. 3: eine erfindungsgemäße Messvorrichtung zur Bestimmung des Planlauffehlers eines der Planflächen zweier Enden eines Rohrabschnitts,
- Fig. 4: eine Frontalansicht eines Messkopfes in Fig. 3,
- Fig. 5: eine Schnittansicht entlang der Linie V - V in Fig. 4,
- Fig. 6: eine Innenansicht des Messkopfes in Fig. 3;
- Fig. 7: eine Innenansicht und Außenansicht des einen und eines weiteren Messkopfes.

Im Stand der Technik wird ein Planlauffehler zweier Enden 1, 2 eines Rohrabschnitts 3 in bekannter Weise mittels zweier Lasersysteme gemessen. Dabei ist der Rohrabschnitt 3 auf zwei gleichsinnig drehenden Paaren von Auflagerollen 4, 5 gelagert. Die einzelnen Auflagerollen werden gleichsinnig gedreht angetrieben, und dadurch wird der Rohrabschnitt 3 in eine Drehbewegung um seine Längsachse L versetzt. Während der Drehung des Rohrabschnitts 3 wird mittels zweier Lasermesssysteme 8, 9 eine Vermessung von zwei stirnseitigen Planflächen 6, 7 des Rohrabschnittes 3 vorgenommen.

Problematisch ist, dass die Lasermesssysteme 8, 9 auf Oberflächenänderungen der Planflächen 6, 7, beispielsweise sich abwechselnd spiegelnde und matte Oberflächen, mit Messungenauigkeiten reagieren. Darüber hinaus ist die axiale Position des rotierenden Rohrabschnittes 3 während der Rotation nicht konstant, da es zu technischen Ungenauigkeiten bei den Auflagerollen 4, 5 kommt. Das führt im Ergebnis dazu, dass eine Messgenauigkeit von weniger als 3 µm nicht erreicht werden kann.

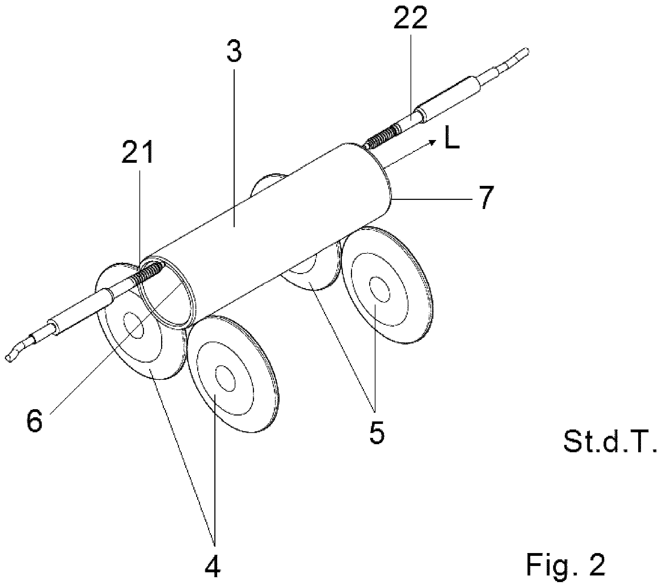

In Fig. 2 ist eine zweite bekannte Messvorrichtung gezeigt, nach der wiederum gleichsinnig rotierende Auflagerollenpaare 4, 5 vorgesehen sind, auf denen der Rohrabschnitt 3 um seine Längsachse L rotiert wird. An den Enden 1, 2 des Rohrabschnittes 3 sind zwei taktile Messsysteme 21, 22 installiert, die jeweils auf eine der Planflächen 6, 7 des Rohrabschnittes 3 gerichtet sind und die jeweilige Planfläche 6, 7 berühren. Da das taktile Messsystem 21, 22 eine Kraft auf den Rohrabschnitt 3 ausübt und der Rohrabschnitt damit zusätzlich axial ausgelenkt wird, sind Messfehler vorhanden, und die Genauigkeit des taktilen Messsystems 21, 22 von weniger als 3 µm ist nicht möglich.

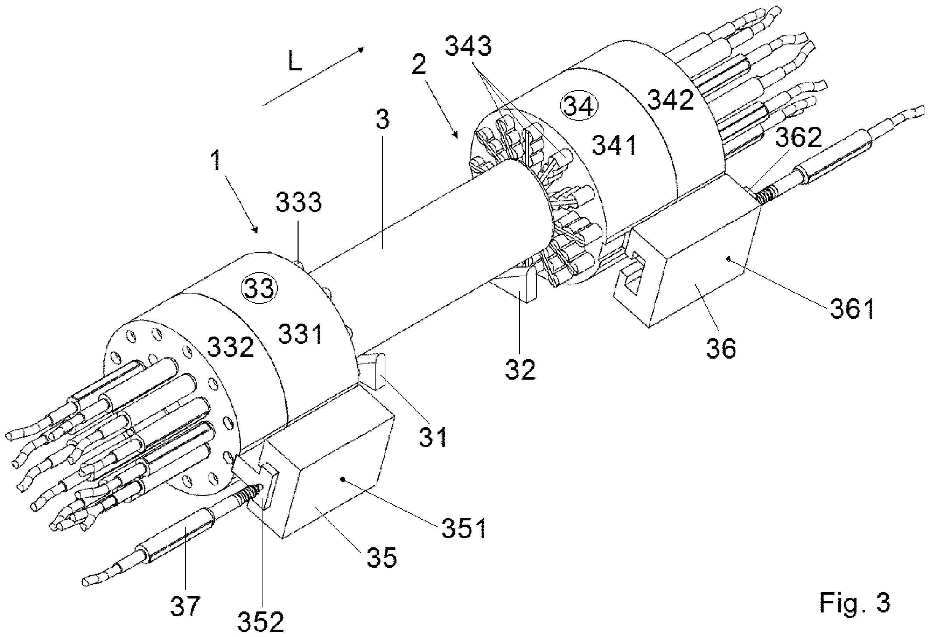

Die in Fig. 3 dargestellte erfindungsgemäße Messvorrichtung ermöglicht jedoch Messgenauigkeiten von besser als 1 µm. Die Messvorrichtung gemäß Fig. 3 weist zwei Auflageprismen 31, 32 auf, auf denen der Rohrabschnitt 3 während der Messung gegenüber den Auflageprismen 31, 32 bewegungslos gelagert ist. Entlang der Längsachse L des Rohrabschnittes 3 ist an dem einen Rohrabschnittsende 3 ein Messkopf 33 und an dem weiteren Rohrabschnittsende 2 ein weiterer Messkopf 34 vorgesehen. Der Messkopf 33 und der weitere Messkopf 34 sind in Richtung der Längsachse L mittels eines nicht dargestellten elektrischen Antriebs hin und her verfahrbar ausgebildet. Die beiden Messköpfe 33, 34 weisen seitlich einen Positionsgeber 35 bzw. einen weiteren Positionsgeber 36 auf. Der Positionsgeber 35, 36 weist eine U-förmige Führung 351, in die ein T-förmiger Läufer 352 eingelassen ist, auf, der mit dem Messkopf 33 fest verbunden ist. Entsprechendes gilt für den weiteren Messkopf 34 und die Konstruktion der weiteren Führung 361 und des weiteren Läufers 362.

An einer dem Rohrabschnitt 3 abgewandten Stirnseite des Läufers 352 ist ein Positionsmesssystem 37 für den Messkopf 33 vorgesehen. Das Entsprechende gilt für den weiteren Messkopf 34.

Der Messkopf 33 selbst weist eine den Auflageprismen 31, 32 zugewandte Messtasterführung 331 und einen Druckdeckel 332 auf. In die Messtasterführung 331 sind ringförmig angeordnet mehrere, im vorliegenden Beispiel zwölf, Messtaster 333 eingelassen. Es können aber auch mehr oder weniger Messtaster 333 vorgesehen sein. Entsprechend umfasst der weitere Messkopf 34 eine weitere Messtasterführung 341 und einen weiteren Druckdeckel 342. In der weiteren Messtasterführung 341 sind zwölf weitere Messtaster 343 angeordnet. Bei den weiteren Messtastern 343 handelt es sich um in Richtung der Längsachse L hin und her verschiebbare, einzeln gegenüber der Messtasterführung 331 bewegliche Bauteile, die in jeweils einer ihnen zugeordneten Einzelführung relativ zur weiteren Messtasterführung 341 beweglich angeordnet sind. Ein äußerer Umfang jedes weiteren Messtasters 343 ist zur Vergrößerung der Kontaktfläche wellenförmig ausgebildet, wodurch seine Einzelführung stabilisiert wird. Entsprechendes gilt wiederum für die Messtaster 333.

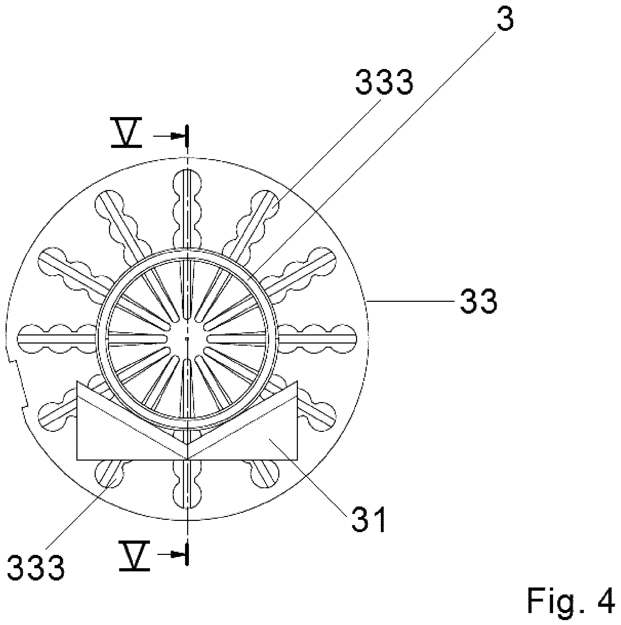

Fig. 4 zeigt eine Frontalansicht des Messkopfes 33 in Fig. 3 mit einer Durchsicht durch den in das Auflageprisma 31 eingelegten Rohrabschnitt 3. Die Längsachse L des Rohrabschnittes 3 und die Längsachse L des Messkopfes 33 stimmen hier überein. Es ist jedoch auch denkbar, dass die Messung mit einer nicht exakt konzentrischen Anordnung durchgeführt wird, dass also die Längsachse L des Rohrabschnittes 3 und eine Längsachse des Messkopfes 33 parallel zueinander versetzt oder sogar in einem geringen Winkel zueinander versetzt angeordnet sind. Fig. 4 zeigt die zwölf Messtaster 333 des Messkopfes 33, die in ihrem dem Rohrabschnitt 3 zugewandten Ende eine Anlage für den Rohrabschnitt 3 aufweisen, so dass jeder der Messtaster 333 mit einem Bereich des Rohrabschnittes 3 in Kontakt gerät, wenn der Messkopf 33 entlang der Längsachse L auf den Rohrabschnitt 3 zur Vermessung des Planlaufs und einer Länge des Rohrabschnitts 3 verfahren wird.

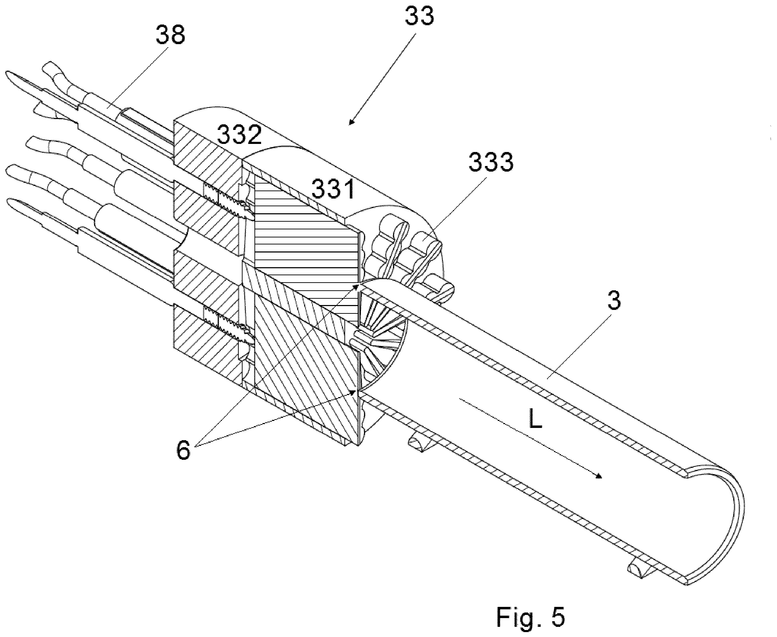

Fig. 5 zeigt eine Schnittansicht der Fig. 4 entlang der Linie V-V. Insbesondere anhand des in Zwölf-Uhr-Stellung und Sechs-Uhr-Stellung entlang der Längsachse L aufgeschnittenen Messtasters 333 ist zu erkennen, dass es sich bei den Messtastern 333 um in einer radialen Richtung schmale Vollprofilbauteile handelt, die entlang der Längsachse L des Messkopfes 33 hin und her beweglich ausgebildet sind, dabei aber aufgrund ihrer wellenförmig ausgebildeten Außenwandung eine sehr stabile Einzelführung aufweisen. Der dem Rohrabschnitt 3 zugewandte Teil des Messkopfes 33 ist die Messtasterführung 331, der dem Rohrabschnitt 3 abgewandte Teil des Messkopfes 33 ist der Druckdeckel 332, der gegen den Messkopf 33 gesetzt ist. In dem Druckdeckel 332 ist für jeden Messtaster 333 ein Messsystem 38 vorgesehen. Bei jedem der zwölf Messsysteme 38 handelt es sich um einen taktilen Messtaster, der die Verschiebung des ihm zugeordneten Messtasters 333 entlang der Längsachse L mit einer Genauigkeit von besser als 1 µm exakt misst. Insbesondere können unterschiedliche Verschiebungen der Messtaster 333 aufgrund eines Fehlers in der Planfläche 6 des Rohrabschnitts 3 erfasst werden.

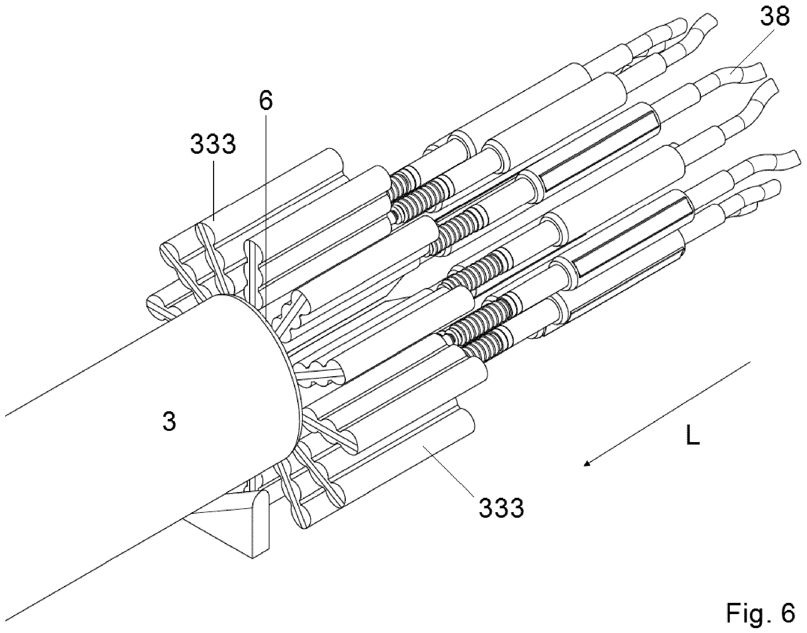

Fig. 6 zeigt die Innenanordnung des Messkopfes 33 mit den zwölf an der Planfläche 6 anliegenden Messtastern 333 und den der Planfläche 6 an den gegenüberliegenden Messtastern 333 gegenüberliegenden Messsystemen 38, die für jeden Messtaster 333 eine Positionsveränderung entlang der Längsachse L exakt messen. Dabei liegt eine Genauigkeit von besser als 1 µm vor. Eine Längsachse L des Rohrabschnitts 3 und der einzelnen Messsysteme 38 sowie der Bewegungsrichtung des Messtasters 333 liegen paarweise parallel zueinander.

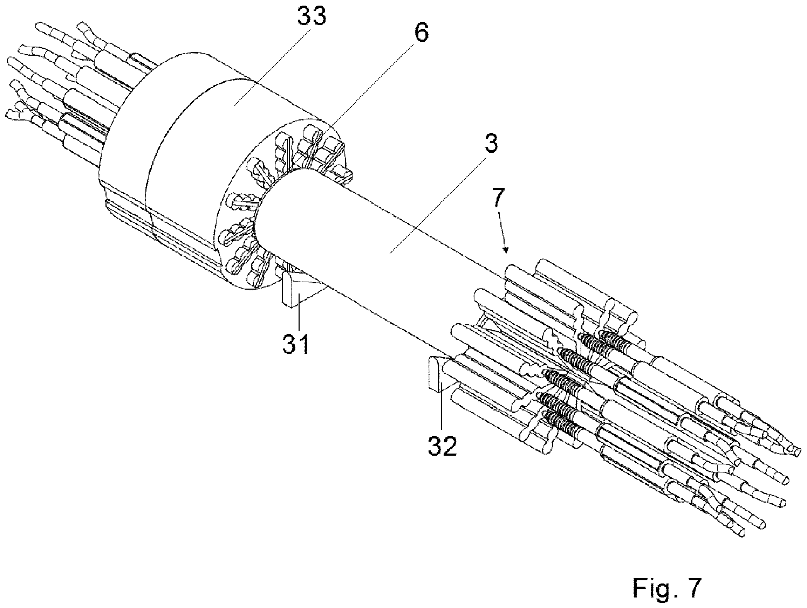

Fig. 7 zeigt die Anordnung des Messkopfes 33 und des abgedeckten weiteren Messkopfes 34, die symmetrisch zueinander aufgebaut sind. Jeder der Messköpfe 33, 34 weist in diesem Fall zwölf Messtaster 333, 343 auf. Es ist natürlich auch eine höhere oder geringere Anzahl an Messtastern 333, 343 an jedem der beiden Messköpfe 33, 34 denkbar. Die Anzahl der Messtaster 333, 343 an den beiden Messköpfen 33, 34 kann auch verschieden voneinander sein.

Zur Durchführung der Messung eines Planlauffehlers der beiden Planflächen 6, 7 des Rohrabschnittes 3 sind zunächst die beiden Messköpfe 33, 34 voneinander weg verfahren. Der Rohrabschnitt 3 wird auf die beiden Auflageprismen 31, 32 gelegt, und die beiden Messköpfe 33, 34 werden dann gleichzeitig auf die beiden Rohrenden 1, 2 zu verfahren, bis die Messtaster 333, 343 jeweils in Berührung mit jeweils einem Abschnitt der Planfläche 6, 7 kommen. Wenn jeder der Messtaster 333, 343 in Berührung mit einem der beiden Planflächen 6, 7 des Rohrabschnittes 3 ist, werden die Messwerte der zwölf Messtaster 333 des Messkopfes 33 und der zwölf weiteren Messtaster 343 des weiteren Messkopfes 34 aufgenommen. Aus den zwölf Einzelmesswerten pro Messkopf 33, 34 kann durch Differenzbildung der Messwert benachbarter Einzelmesstaster 333, 343 das Profil der Planfläche 6 durch Interpolation der Einzelpunkte bestimmt werden. Die Planfläche 6 kann so mit einem Fehler von weniger als 1 µm bestimmt werden. Eine entsprechende Messung wird mit dem weiteren Messkopf 34 an der weiteren Planfläche 7 vorgenommen werden. Die Auswertung ist ebenfalls entsprechend zur Auswertung der Messwerte des Messtasters 333 an der Planfläche 6.

Zusätzlich wird mittels der beiden Positionsgeber 35, 36 an den beiden Messköpfen 33, 34 ein Abstand der beiden Messköpfe 33, 34 voneinander bestimmt, und damit kann auf eine den Planflächenfehler berücksichtigende Länge des Rohrabschnittes 3 geschlossen werden. Die Berechnungen erfolgen in einer nicht dargestellten Auswerteeinheit. So ist es möglich, eine maximale Rohrlänge, eine minimale Rohrlänge und eine mittlere Rohrlänge anzugeben.

### Bezugszeichenliste

- 1: Ende des Rohrabschnitts
- 2: Ende des Rohrabschnitts
- 3: Rohrabschnitt
- 4: Auflagerolle
- 5: Auflagerolle
- 6: Planfläche
- 7: Planfläche
- 8: Lasermesssystem
- 9: Lasermesssystem

- 21: taktiles Messsystem
- 22: taktiles Messsystem

- 31: Auflageprisma
- 32: Auflageprisma
- 33: Messkopf
- 34: Messkopf
- 35: Positionsgeber
- 36: Positionsgeber
- 37: Positionsmesssystem
- 38: Messsysteme

- 331: Messtasterführung
- 332: Druckdeckel
- 333: Messtaster

- 341: Messtasterführung
- 342: Druckdeckel
- 343: Messtaster

- 351: U-förmige Führung
- 352: T-förmiger Läufer

- 361: U-förmige Führung
- 362: T-förmiger Läufer
- L: Längsachse

## Patentansprüche

1. Messvorrichtung zur Messung eines Planlaufs einer Planfläche (6, 7) eines Langprofils (3) mit
wenigstens einem entlang einer Längsachse (L) hin und her verschiebbaren Messkopf (33, 34) mit einer Vielzahl nebeneinander kreisförmig angeordneter in Längsrichtung einzeln relativ zum Messkopf (33, 34) beweglicher Messtaster (333, 343), die ausgebildet sind zu einer neben dem Messkopf (33, 34) angeordneten Auflage (31, 32) für das Langprofil (3) zu weisen, und einer Auswerteeinrichtung, die mit jedem der Messtaster (333, 343) datenleitend verbunden ist und eingerichtet ist aus Einzelmesswerten der Messtaster (333, 343) den Planlauf zu berechnen und mit zwei sich entlang der Längsachse (L) gegenüber angeordneten Messköpfen (33, 34), zwischen denen die Auflage (31, 32) für das Langprofil (3) angeordnet ist und wobei die Messtaster (333) des einen Messkopfes (33) und weitere Messtaster (343) des weiteren Messkopfes (34) jeweils ausgebildet sind zur Auflage (31, 32) zu weisen und die weiteren Messtaster (343) relativ zum weiteren Messkopf (34) in Längsrichtung beweglich ausgebildet sind und nebeneinander angeordnet sind und die Auswerteeinrichtung eingerichtet ist Differenzwerte aus den Einzelmesswerten zu berechnen und aus den Differenzwerten den Planlauf zu errechnen.

2. Messvorrichtung nach Anspruch 1,
**dadurch gekennzeichnet, dass** jeder der Messtaster (333) eine Anlage für das Langprofil (3) aufweist und jedem Messtaster (333) ein Messsystem (38) zugeordnet ist, das mit der Auswerteeinrichtung datenleitend in Verbindung steht.

3. Messvorrichtung nach Anspruch 2,
**dadurch gekennzeichnet, dass** das Messsystem (38) einen taktilen Messtaster umfasst.

4. Messvorrichtung nach einem der Ansprüche 1 bis 3,
**dadurch gekennzeichnet, dass** der weitere Messkopf (34) entlang der Längsachse (L) hin und her verschiebbar ausgebildet ist.

5. Messvorrichtung nach einem der vorstehenden Ansprüche,
**dadurch gekennzeichnet, dass** dem Messkopf (33) ein Positionsgeber (35) und dem weiteren Messkopf (34) ein weiterer Positionsgeber (36) zugeordnet ist.

6. Verfahren zur Messung eines Planlaufs einer Planfläche (6, 7) eines Langprofils (3), indem
das Langprofil (3) in eine Auflage (31, 32) gelegt wird, wenigstens ein Messkopf (33, 34) mit einer Vielzahl nebeneinander kreisförmig angeordneter in Längsrichtung einzeln relativ zum Messkopf (33, 34) beweglicher Messtaster (333, 343) entlang einer Längsachse (L) zur Planfläche (6, 7) verschoben wird, bis alle Messtaster (333, 343) einen Abschnitt der Planfläche (6, 7) berühren und Einzelmesswerte der Messtaster (333, 343) einer Auswerteeinrichtung zugeführt werden, wobei Differenzwerte aus den Einzelmesswerten berechnet werden und aus den Differenzwerten der Planlauf berechnet wird und zwischen zwei sich entlang der Längsachse (L) gegenüber angeordneten Messköpfen (33, 34) die Auflage (31, 32) für das Langprofil (3) angeordnet ist und der Messtaster (333) des einen Messkopfes (33) und weitere Messtaster (343) des weiteren Messkopfes (34) jeweils zur Auflage (31, 32) weisen und die weiteren Messtaster (343) relativ zum weiteren Messkopf (34) in Längsrichtung beweglich ausgebildet sind und nebeneinander angeordnet sind.

7. Verfahren nach Anspruch 6,
**dadurch gekennzeichnet, dass** Positionsmesswerte des Messkopfes (33) und des weiteren Messkopfes (34) jeweils mittels eines Positionsgebers (35, 36) gemessen werden und aus den Positionsmesswerten eine Langprofillänge unter Berücksichtigung des Planlaufs bestimmt wird.

## Claims

1. Measuring device for measuring a runout of a planar face (6, 7) of a longitudinal profile (3) with
at least one measuring head (33, 34) which can move back and forth along a longitudinal axis (L) and has a plurality of measuring sensors (333, 343) which are arranged adjacent to each other and which can move individually in the longitudinal direction relative to the measuring head (33, 34) and are oriented towards a support (31, 32) for the longitudinal profile (3), said support being arranged adjacent to the measuring head (33, 34); and an evaluation unit which is connected in a data conducting manner to each of the measuring sensors (333, 343) and is set up to calculate the runout from the individual values measured by the measuring sensors (333, 343)
and with two measuring heads (33, 34) which are arranged opposite one another along the longitudinal axis (L) and between which the support (31, 32) for the longitudinal profile (3) is arranged and wherein the measuring sensors (333) of one measuring head (33) and further measuring sensors (343) of the further measuring head (34) each are designed to be orientated towards the support (31, 32), and the further measuring sensors (343) are designed to be movable in the longitudinal direction relative to the further measuring head (34) and are arranged adjacent to one another and the evaluation unit is set up to calculate difference values from the individual values and to calculate the runout from the difference values.

2. Measuring device according to claim 1,
**characterised in that** each of the measuring sensors (333) has a bearing surface for the longitudinal profile (3) and a measuring system (38), which is connected in a data conducting manner to the evaluation unit, is associated with each measuring sensor (333).

3. Measuring device according to claim 2,
**characterised in that** the measuring system (38) comprises a tactile measuring sensor.

4. Measuring device according to one of claims 1 to 3,
**characterised in that** the further measuring head (34) is designed to be displaceable back and forth along the longitudinal axis (L).

5. Measuring device according to one of the preceding claims,
**characterised in that** a position transmitter (35) is associated with the measurement head (33) and a further position transmitter (36) is associated with the further measurement head (34).

6. Method for measuring a runout of a planar face (6, 7) of a longitudinal profile (3), in which
the longitudinal profile (3) is placed into a support (31, 32),
at least one measuring head (33, 34) with a plurality of moveable measuring sensors (333, 343) arranged in a circle adjacent to one another in a longitudinal direction individually relative to the measuring head (33, 34) along a longitudinal axis (L) is moved towards the planar face (6, 7), until all measuring sensors (333, 343) touch a portion of the planar face (6, 7) and individual measured values of the measuring sensors (333, 343) are supplied to an evaluation unit wherein difference values from the individual measured values are calculated and from the difference values the runout is calculated and the support (31, 32) for the longitudinal profile is arranged between two measuring heads (33, 34) being arranged opposite each other along the longitudinal axis (L)
and the measuring sensor (333) of the one measuring head (33) and further measuring sensors (343) of the further measuring head (34) each are orientated towards the support (31, 32) and the further measuring sensors (343) are designed moveable in the longitudinal direction relative to the further measuring head (34) and are arranged adjacent to one another.

7. Method according to claim 8 or 9,
**characterised in that** position measuring values of the measuring head (33) and of the further measuring head (34) are each measured by means of a position transmitter (35, 36) and a length of a longitudinal profileis determined from the position measuring values taking account of the runout.

## Revendications

1. Dispositif de mesure pour la mesure d'un battement axial d'une surface plane (6, 7) d'un profilé longitudinal (3) avec au moins une tête de mesure (33, 34) déplaçable en va-et-vient le long d'un axe longitudinal (L) avec une multitude de capteurs de mesure (333, 343) placés de manière circulaire les uns à côté des autres, mobiles individuellement dans le sens longitudinal par rapport à la tête de mesure (33, 34), qui sont conçus pour être tournés vers un support (31, 32) pour le profilé longitudinal, support placé près de la tête de mesure (33, 34), et avec un dispositif d'évaluation qui est relié à chacun des capteurs de mesure (333, 343) pour transmettre des données et qui est agencé pour calculer le battement axial à partir des valeurs de mesure individuelle des capteurs de mesure (333, 343) et avec deux têtes de mesure (33, 34) placées opposées le long de l'axe longitudinal (L), entre lesquelles le support (31, 32) pour le profilé longitudinal (3) est placé et cependant que les capteurs de mesure (333) de l'une des têtes de mesure (34) et d'autres capteurs de mesure (343) de l'autre tête de mesure (34) sont conçus chacun pour être tourné vers le support (31, 32) et les autres capteurs de mesure (343) sont conçus mobiles dans le sens longitudinal par rapport à l'autre tête de mesure (34) et sont placés l'un à côté de l'autre et le dispositif d'évaluation est agencé pour calculer des valeurs différentielles à partir des valeurs de mesure individuelles et pour calculer le battement axial à partir des valeurs différentielles.

2. Dispositif de mesure selon la revendication 1, **caractérisé en ce que** chacun des capteurs de mesure (333) présente un appui pour le profilé longitudinal (3) et qu'un système de mesure (38), qui est en relation avec le dispositif d'évaluation pour transmettre des données, est associé à chaque capteur de mesure (333).

3. Dispositif de mesure selon la revendication 2, **caractérisé en ce que** le système de mesure comprend un capteur de mesure tactile.

4. Dispositif de mesure selon l'une des revendications 1 à 3, **caractérisé en ce que** l'autre tête de mesure (34) est conçue déplaçable en va-et-vient le long de l'axe longitudinal (L).

5. Dispositif de mesure selon l'une des revendications précédentes, **caractérisé en ce qu'**un capteur de position (35) est associé à la tête de mesure (33) et qu'un autre capteur de position (36) est associé à l'autre tête de mesure (34).

6. Procédé pour la mesure d'un battement axial d'une surface plane (6, 7) d'un profilé longitudinal (3), cependant que le profilé longitudinal (3) est posé dans un support (31, 32), qu'au moins une tête de mesure (33, 34) avec une multitude de capteurs de mesure (333, 343) placés de manière circulaire les uns à côté des autres, mobiles individuellement dans le sens longitudinal par rapport à la tête de mesure (33, 34) est déplacée le long d'un axe longitudinal (L) par rapport à la surface plane (6, 7) jusqu'à ce que tous les capteurs de mesure (333, 343) touchent une portion de la surface plane (6, 7) et que des valeurs de mesure individuelles des capteurs de mesure (333, 343) sont amenées à un dispositif d'évaluation, cependant que des valeurs différentielles sont calculées à partir des valeurs de mesure individuelles et que le battement axial est calculé à partir des valeurs différentielles et que le support (31, 32) pour le profilé longitudinal (3) est placé entre deux têtes de mesure (33, 34) placées opposées le long de l'axe longitudinal (L) et le capteur (333) de l'une des têtes de mesure (33) et d'autres capteurs de mesure (343) de l'autre tête de mesure (34) sont tournés chacun vers le support (31, 32) et les autres capteurs de mesure (343) sont conçus mobiles par rapport à l'autre tête de mesure (34) dans le sens longitudinal et sont placés l'un à côté de l'autre.

7. Procédé selon la revendication 6, **caractérisé en ce que** des valeurs de mesure de position de la tête de mesure (33) et de l'autre tête de mesure (34) sont mesurées respectivement au moyen d'un capteur de position (35, 36) et qu'une longueur de profilé longitudinal est déterminée à partir des valeurs de mesure de position en tenant compte du battement axial.
